# EUROPÄISCHE PATENTANMELDUNG

(11) **EP 2 028 390 A1**
(43) Veröffentlichungstag der Anmeldung: **25.02.2009**
(21) Anmeldenummer: 08162360.5
(22) Anmeldetag: 14.08.2008
(51) Int. Cl.: F16F 9/46

(54) **Verstellbarer Schwingungsdämpfer**

(30) Priorität: 21.08.2007 DE 102007039400
(71) Anmelder: ZF Friedrichshafen AG, 88038 Friedrichshafen (DE)
(72) Erfinder: Stock, Rainer, 97640 Hendungen (DE); Memmel, Georg, 97422 Schweinfurt (DE); Schubert, Thomas, 97464 Niederwerrn (DE)

(57) **Zusammenfassung**

Schwingungsdämpfer (1) mit einem verstellbaren Dämpfventil (27), das von einem Dämpfmedium angeströmt wird, umfassend ein Ventilgehäuse (33) mit einem Druckraum (87), in dem ein auf ein Ventilelement (51) einwirkender Stellkolben (83) über eine Druckmediumversorgung (29) mit einem Druckmedium beaufschlagt wird, wobei der Stellkolben (83) gegen eine Rückstellfeder (107) angesteuert wird, wobei das verstellbare Dämpfventil (27) für das Ventilelement (51) ein Vorsteuerventil (39) aufweist, das einen Dämpfmediumstrom innerhalb des verstellbaren Dämpfventils (27) zwischen einem Steuerraum (61) und einem Arbeitsraum (21a,21b) des Schwingungsdämpfers beeinflusst, wobei in Abhängigkeit des Druckniveaus innerhalb des Steuerraum (61) eine Schließkraft auf ein die Dämpfkraft bestimmendes Hauptdämpfventil (37) ausgeübt wird.

## Beschreibung

Die Erfindung betrifft einen verstellbaren Schwingungsdämpfer gemäß dem Oberbegriff von Patentanspruch 1.

Neben Schwingungsdämpfern mit elektrisch verstellbaren Dämpfventilen sind auch Ausführungen bekannt, bei denen der Druck eines Steuermediums zur Dämpfventilbetätigung verwendet wird. Der große Vorteil dieser verstellbaren Dämpfventile besteht darin, dass man mit sehr geringem Aufwand eine lastabhängige Dämpfkraftsteuerung erreichen kann, indem man z. B. den Betriebsdruck einer Luftfeder an einer Fahrzeugachse ausnutzt. Beispielhaft sind in diesem Zusammenhang die DE 198 07 211 B4 oder die DE 197 57 276 A1 zu nennen. Bei diesen Schwingungsdämpfern wird bei erhöhtem Betriebsdruck in der Luftfeder ein Ventilelement stärker in Schließrichtung vorgespannt.

Moderne Achskonstruktionen verfügen teilweise über vier große Luftfedern, so dass die Beladung des Fahrzeugs pro Luftfeder nur zu einer geringen Drucksteigerung führt. Dieses Betriebsverhalten der Luftfeder begrenzt den Verstellbarkeitsbereich des verstellbaren Dämpfventils. In der DE 197 57 276 A1 kommt ein Übertragungskolben mit einer vergleichsweise großen druckbeaufschlagten Fläche zur Anwendung, so dass diese Bauart schon dem Problem des Verstellbarkeitsbereichs begegnet, jedoch noch nicht löst.

Aufgabe der vorliegenden Erfindung ist es, ein mittels Druckmedium verstellbares Dämpfventil mit einem im Vergleich zum Stand der Technik vergrößerten Verstellbereich zu realisieren.

Erfindungsgemäß wird die Aufgabe dadurch gelöst, dass das verstellbare Dämpfventil für das Ventilelement ein Vorsteuerventil aufweist, das einen Dämpfmediumstrom innerhalb des verstellbaren Dämpfventils zwischen einem Steuerraum und einem Arbeitsraum des Schwingungsdämpfers beeinflusst, wobei in Abhängigkeit des Druckniveaus innerhalb des Steuerraum eine Schließkraft auf ein die Dämpfkraft bestimmendes Hauptdämpfventil ausgeübt wird.

Der große Vorteil der Erfindung besteht darin, dass zwischen dem Stellkolben als ein Aktuator und dem vom Dämpfmedium beaufschlagten Dämpfventil keine mechanische Kraftübertragung stattfindet, sondern durch die Position des Stellkolbens der Druck des Dämpfmediums innerhalb des Schwingungsdämpfers ausgenutzt wird, um das verstellbare Dämpfventil zu betätigen. Folglich benötigt man nur geringe Druckunterschiede, um den Stellkolben zu bewegen, und in Folge einen großen Verstellbereich zu realisieren.

Im Hinblick auf eine kompakte Bauform und einfache Strömungswege weist das Hauptdämpfventil einen Steuerkanal zwischen einem Arbeitsraum und dem Steuerraum des verstellbaren Dämpfventils auf.

In weiterer vorteilhafter Ausgestaltung wird der Steuerkanal von mindestens einer Öffnung in einem Hauptdämpfventilkörper gebildet. Dabei ist der Hauptdämpfventilkörper mit einer ersten Deckseite an einen Arbeitsraum und seiner zweiten Deckseite an den Steuerraum angeschlossen.

Gemäß einem vorteilhaften Unteranspruch ist das Vorsteuerventil als Schieberventil ausgeführt. Mit dem Schieberventil kann ein fein einstellbares Verhältnis von Stellkolbenweg/Drosselöffnung im Vorsteuerventil erreicht werden.

Des Weiteren ist vorgesehen, dass zwischen dem Steuerraum des Hauptdämpfventils und einem Vorsteuerventilraum des Vorsteuerventils eine Trennwand besteht, die einen Anschlusskanal mit einer Drosselöffnung aufweist, die von dem Stellkolben in ihrer wirksamen Größe eingestellt wird. Mit dem Stellkolben wird der Abfluss von Dämpfmedium aus dem Steuerraum eingestellt.

Der Anschlusskanal wird von einem Rohrkörper gebildet, der mit einem am Stellkolben befestigten Schieber zusammenwirkt.

Der Schieber des Stellkolbens ist als Außenrohrkörper ausgeführt, der auf dem Rohrkörper des Anschlusskanals axial verschieblich gleitbar gelagert ist. Zusätzlich ist der Anschlusskanal endseitig in Richtung des Stellkolbens verschlossen. Damit wird erreicht, dass im Vorsteuerventilraum ein um das Druckgefälle im Schieberventil verringertes Druckniveau herrscht und lediglich dieses Druckniveau auf den Schieber des Stellkolbens wirkt.

Im Hinblick auf eine einfache Fertigung wird der Vorsteuerventilraum von der Trennwand und einem Vorsteuerventilgehäuse innerhalb des Ventilgehäuses gebildet, wobei der Schieber durch eine Anschlussöffnung im Vorsteuerventilgehäuse bewegbar ist. Das Vorsteuerventilgehäuse mit allen Einzelteilen kann unabhängig vom Hauptdämpfventil montiert werden.

Zur besseren Führung ist der Stellkolben in einem Deckel des Vorsteuerventilgehäuses dichtend geführt.

Das Ventilgehäuse und das darin befindliche Vorsteuerventilgehäuse begrenzen einen Entlüftungsraum für den Stellkolben. Ein den Rohrkörper des Anschlusskanals aufnehmender Innenraum des Schiebers ist mit einer Lüftungsöffnung zum Entlüftungsraum verbunden. Damit können sich keine Staudrücke in druckmediumgefüllten Räumen bilden.

Wie bereits ausgeführt, handelt es sich bei dem Schieber im Prinzip um einen Rohrkörper. Zur Abstützung der Rückstellfeder ist an dem Schieber ein Federteller für mindestens eine Rückstellfeder befestigt.

Eine generelle Aufgabenstellung bei allen verstellbaren Dämpfventilen besteht darin, dass der Schwingungsdämpfer bei einem Defekt der Energieversorgung einer Dämpfkraftkennlinie folgt, die ein sicheres Fahren des Fahrzeugs ermöglicht. Eine ganz einfache Möglichkeit bestände darin, den Drosselquerschnitt am Vorsteuerventil vollständig zu verschließen, so dass die Dämpfkraftkennlinie mit der größten Dämpfkraft vorliegt. Diese Dämpfkraftkennlinie wäre für viele Fahrsituation überzogen. Deshalb weist der Vorsteuerventilraum mindestens eine vom der Drosselöffnung getrennte Anschlussöffnung an einen Arbeitsraum auf, die von dem Schieber angesteuert wird. Wenn der Schieber im Betrieb ist, wird die Anschlussöffnung soweit geöffnet, dass diese das Druckniveau im Vorsteuerventilraum und auch im Steuerraum nicht beeinflusst.

Dafür trägt der Schieber mindestens einen Ventilkörper, der mit der Anschlussöffnung ein Sitzventil bildet.

Die Notbetriebskennlinie wird von der Anschlussöffnung gebildet, die bei geschlossenem Sitzventil einen Notbetriebsdurchlassquerschnitt aufweist.

Zur konstruktiven Ausgestaltung der Anschlussöffnungen sind verschiedene Möglichkeiten denkbar. Für eine schnelle und fertigungstechnisch einfache Anpassung wird der Notbetriebsdurchlassquerschnitt von einer Öffnung im Ventilkörper gebildet.

Anhand der folgenden Figurenbeschreibung soll die Erfindung näher erläutert werden.

Es zeigt:
- Fig. 1: Schwingungsdämpfer in Gesamtdarstellung
- Fig. 2: Ausschnitt aus dem Schwingungsdämpfer nach Fig. 1 im Bereich des verstellbaren Dämpfventils
- Fig. 3: Vorsteuerventil nach Fig. 2
- Fig. 4: Anschlussöffnung im Vorsteuerventil nach Fig. 3

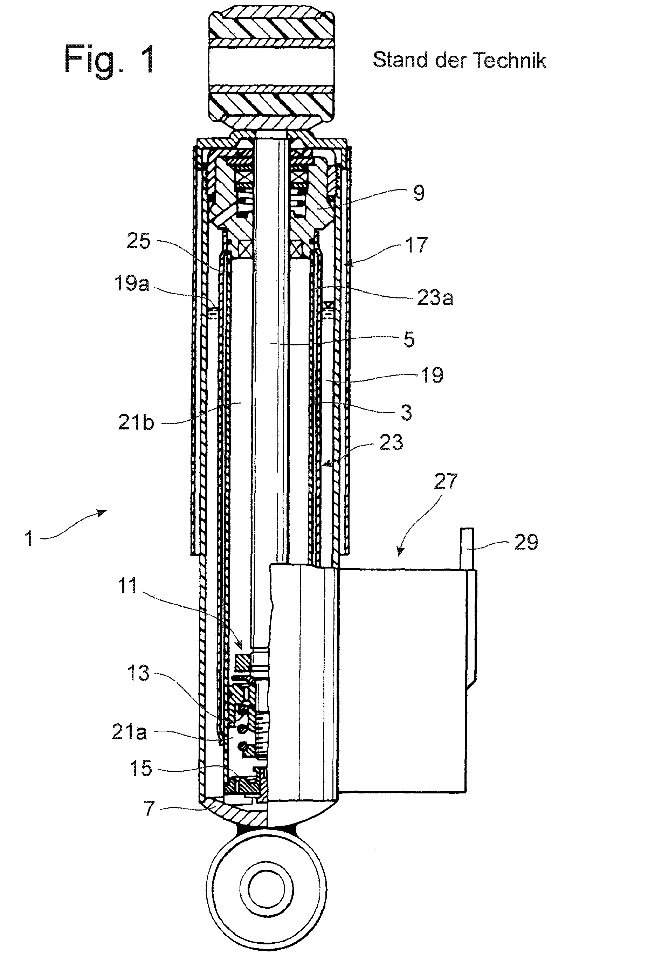

In Fig. 1 ist ein Schwingungsdämpfer 1 mit einem Zylinder 3 dargestellt, in dem eine Kolbenstange 5 axial beweglich angeordnet ist. Der Zylinder ist nach unten durch einen Boden 7 abgeschlossen. Die Kolbenstange 5 ist durch eine Führungs- und Dichtungseinheit 9 aus dem oberen Ende des Zylinders herausgeführt. Innerhalb des Zylinders 3 ist an der Kolbenstange 5 eine Kolbeneinheit 11 mit einer Kolbenventilanordnung 13 befestigt. Der Boden des Zylinders 3 ist mit einer Bodenventilanordnung 15 versehen. Der Zylinder 3 wird von einem Behälterrohr 17 umhüllt. Das Behälterrohr 17 und der Zylinder 1 bilden ist einen Ringraum 19, der eine Ausgleichskammer darstellt. Der Zylinders 1 ist durch die Kolbeneinheit 11 in eine erste Arbeitskammer 21 a und eine zweite Arbeitskammer 21 b unterteilt. Die Arbeitskammern 21 a und 21 b sind mit Dämpfmedium, bevorzugt einem Öl, gefüllt. Sowohl die Arbeitskammern 21 a; 21 b wie auch die Ausgleichskammer 19 sind als Arbeitsräume des Schwingungsdämpfers anzusehen.

Die Ausgleichskammer 19 ist bis zu dem Niveau 1 9a mit Dämpfmedium und darüber mit Gas gefüllt. Innerhalb der Ausgleichskammer 19 wird eine erste Leitungsstrecke, nämlich eine Hochdruckteilstrecke 23a, von einem Zwischenrohr 23 gebildet, welche über eine Bohrung 25 des Zylinders 1 mit der zweiten Arbeitskammer 21b in Verbindung steht. An diese Hochdruckteilstrecke schließt sich ein seitlich an dem Behälterrohr 17 angebautes verstellbares Dämpfventil 27 an. Von diesem führt (nicht dargestellt) eine zweite Leitungsstrecke, nämlich eine Niederdruckteilstrecke, zu dem Ausgleichsraum 19. Das verstellbare Dämpfventil verfügt über eine Anschlussleitung an eine Druckversorgung 29, z. B. einer nicht dargestellten Luftfeder eines Fahrwerks.

Wenn die Kolbenstange 5 aus dem Zylinder 3 nach oben ausfährt, wird die obere Arbeitskammer 21 b verkleinert. Es bildet sich in der oberen Arbeitskammer 21 b ein Überdruck aus, der sich durch die Kolbenventilanordnung 13 in die untere Arbeitskammer 21 a abbauen kann, solange das verstellbare Dämpfventil 27 geschlossen ist. wenn das verstellbare Dämpfventil Ventil 27 geöffnet ist, so fließt gleichzeitig Flüssigkeit von der oberen Arbeitskammer 21 b durch die Hochdruckteilstrecke 23 und das verstellbare Dämpfventil 27 in die Ausgleichskammer 19. Die Dämpfcharakteristik des Schwingungsdämpfers beim Ausfahren der Kolbenstange 5 ist also davon abhängig, ob das verstellbare Dämpfventil 27 offen oder geschlossen ist.

Wenn die Kolbenstange 3 in den Zylinder 3 einfährt, so bildet sich in der unteren Arbeitskammer 21 a ein Überdruck. Dämpfmedium kann von der unteren Arbeitskammer 21 a durch die Kolbenventilanordnung 13 nach oben in die obere Arbeitskammer 21 b übergehen. Das durch das zunehmende Kolbenstangenvolumen innerhalb des Zylinders 1 verdrängte Dämpfmedium wird durch die Bodenventilanordnung 15 in die Ausgleichskammer 19 ausgetrieben. In der oberen Arbeitskammer 21 b tritt, da der Durchflusswiderstand der Kolbenventilanordnung 13 geringer ist als der Durchflusswiderstand der Bodenventilanordnung 15, ebenfalls ein steigender Druck auf. Dieser steigende Druck kann bei geöffnetem verstellbarem Dämpfventil 27 durch die Hochdruckteilstrecke 23a wiederum in den Ausgleichsraum 19 überfließen. Dies bedeutet, dass bei geöffnetem druckabhängig reagierendem Ventil 27 der Stoßdämpfer auch beim einfahren dann eine weichere Charakteristik hat, wenn das verstellbare Dämpfventil 27 geöffnet ist und eine härtere Charakteristik, wenn das druckabhängig reagierende Ventil geschlossen ist, genauso wie beim Ausfahren der Kolbenstange. Festzuhalten ist, dass die Strömungsrichtung durch die Hochdruckteilstrecke 23a des Bypasses immer die gleiche ist, gleichgültig, ob die Kolbenstange ein- oder ausfährt. Man kann auch vorsehen, dass das verstellbare Dämpfventil 27 abflussseitig an einen Arbeitsraum 21 a; 21 b angeschlossen ist, z. B. bei einer Kombination mit einem Schwingungsdämpfer nach dem Einrohrbauprinzip. Die vorgeschriebene Schwingungsdämpferkonstruktion ist nur beispielhaft anzusehen und keinesfalls als einzige mit der Erfindung kombinierbare Bauform zu verstehen.

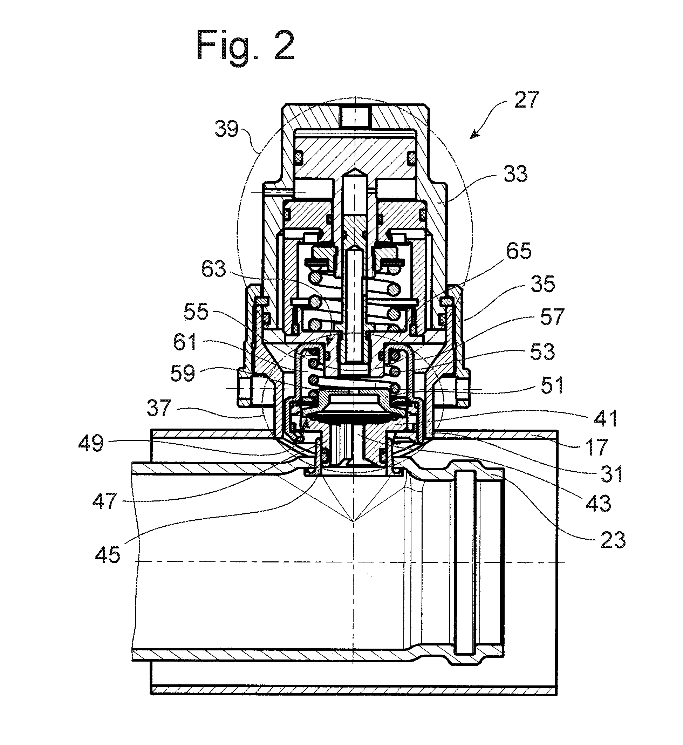

Die Figur 2 beschränkt sich auf einen Ausschnitt des Schwingungsdämpfers 1 im Bereich des verstellbaren Dämpfventils 27. Das Behälterrohr 17 verfügt über einen Rohrstutzen 31, an dem ein Ventilgehäuse 33 mittels einer Überwurfmutter 35 fixiert ist. In dem Ventilgehäuse 33 sind ein Hauptdämpfventil 37 und ein Vorsteuerventil 39 angeordnet.

Das Hauptstufenventil 37 umfasst einen Sitzventilkörper 41 mit einer Zuflussöffnung 43 für die Hochdruckteilstrecke 23a, die von dem Zwischenrohr 23 begrenzt wird (Fig. 1). In dem Zwischenrohr ist ein Übergangsstutzen 45 eingelegt, der mit einem Hülsenteil 47 des Sitzventilkörpers 41 in Überdeckung steht. Auf einer Sitzfläche 49 des Sitzventilkörpers 41 wird ein Hauptdämpfventilkörper 51 von einer Schließfeder 53 vorgespannt, die sich an einer Rückwand 55 eines Hauptdämpfventilgehäuses 57 abstützt, das mit dem Sitzventilkörper 41 verbördelt ist.

Innerhalb des Hauptstufenventilkörpers 51 ist ein Steuerkanal 59 in Form einer einfachen Öffnung ausgeführt. Eine erste Deckseite des Hauptdämpfventilkörpers weist in Richtung der Hochdruckteilstrecke 23a der Arbeitskammer und eine zweite Deckseite ist an einen Steuerraum 61 innerhalb des Hauptstufenventils 37 angeschlossen. Damit verbindet der Steuerkanal 59 die Hochdruckteilstrecke 23a bzw. die Arbeitskammer 21 a mit dem Steuerraum 61 der vollständig mit Dämpfmedium gefüllt ist.

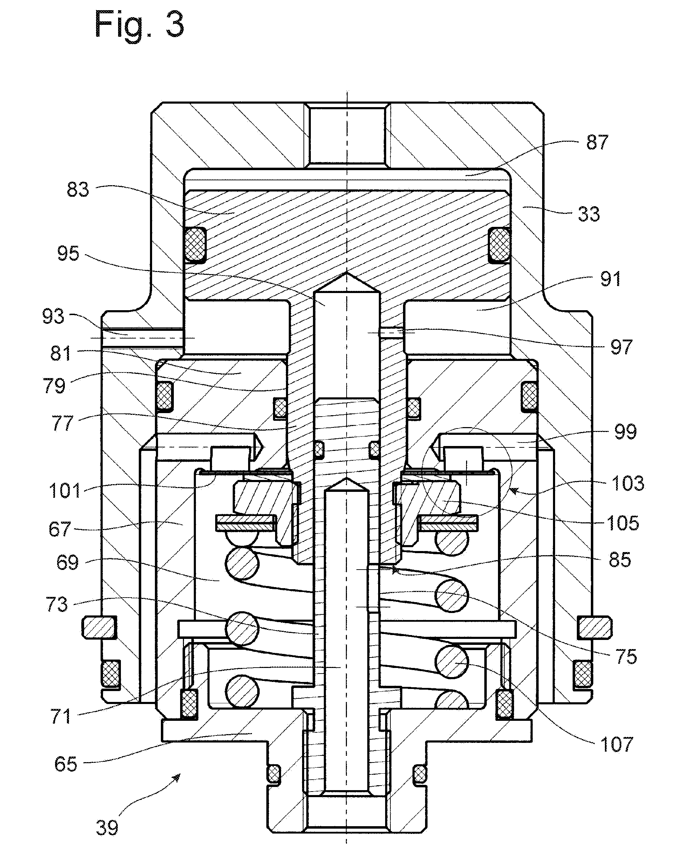

In der Rückwand 55 des Hauptdämpfventilgehäuses 57 ist eine Übergangsöffnung 63 für eine Trennwand 65 zum Vorstufenventil 39 ausgeführt, das in der Fig. 3 näher erläutert wird. Die Trennwand 63 und ein Vorsteuerventilgehäuse 67 begrenzen einen Vorsteuerventilraum 69, der über einen Anschlusskanal 71 mit dem Steuerraum 61 des Hauptdämpfventils 37 verbunden ist. Der Anschlusskanal 71 wird von einem in Längsrichtung des Vorsteuerventilgehäuses 67 verlaufenden Rohrkörper 73 gebildet, der im Vorsteuerventilraum 69 eine radiale Drosselöffnung 75 aufweist. Die wirksame Größe der Drosselöffnung 75 wird von einem als Außenrohrkörper gebildeten Schieber 77 bestimmt, der auf dem Rohrkörper 73 verschieblich gleitbar gelagert ist, so dass das Vorsteuerventil 39 als ein Schieberventil ausgeführt ist. Der Schieber 77 gleitet durch eine Anschlussöffnung 79 innerhalb eines Deckels 81 des Vorsteuerventilgehäuses 67. Dabei ist der Anschlusskanal 71 endseitig in Richtung eines Stellkolbens 83 verschlossen, so dass der Betriebsdruck des Dämpfmediums im Vorsteuerventilraum 69 nur auf die in den Vorsteuerventilraum 69 weisende kreisringförmige Stirnfläche 85 des Schiebers 77 wirkt.

Der Schieber 77 wiederum ist mit einem Stellkolben 83 fest verbunden, so dass über die Axialposition des Stellkolbens die wirksame Größe der Drosselöffnung eingestellt wird. In dem Ventilgehäuse 33 ist ein Druckraum 87 ausgeführt, in dem der Stellkolben 83 axial verschiebbar gelagert ist. Der Druckraum 83 verfügt über eine Druckmediumversorgungsöffnung 89 für die Druckversorgung 29 (Fig. 1). Auf der dem Druckraum 83 abgewandten Seite des Stellkolbens 83 bilden das Ventilgehäuse 33 und das Vorsteuerventilgehäuse 67 einen Entlüftungsraum 91, der über eine Entlüftungsöffnung 93 mit der Atmosphäre verbunden ist. Ein Innenraum 95 des Schiebers 77, in dem der Rohrkörper 73 des Anschlusskanals 71 gleitet, ist über eine radial Lüftungsöffnung 97 an den Entlüftungsraum angeschlossen. Der Schieber 77 kann im Bereich der Lüftungsöffnung 97 leicht tailliert ausgeführt sein, so dass auch bei einer axialen Überdeckung mit dem Deckel 81 des Vorsteuerventilgehäuses 67 eine ausreichende Strömungsverbindung vorliegt.

Der Vorsteuerventilraum 69 verfügt über mindestens eine Anschlussöffnung 99 an einem Arbeitsraum, d. h. Arbeitskammern 21 a; 21 b oder Ausgleichsraum 19, wobei die Anschlussöffnung 99 im Querschnitt mindestens so groß ist, wie die maximal geöffnete Drosselöffnung 75. Die Anschlussöffnung 99 wird ebenfalls von dem Schieber 77 angesteuert, indem der Schieber 77 mindestens einen Ventilkörper 101 trägt, der mit der mindestens einen Anschlussöffnung ein Sitzventil 103 bildet. Der Ventilkörper 101 wird von einer Ventilscheibe gebildet, die von einem als Federteller 105 ausgeführten Befestigungsmittel auf dem Schieber 77 gehalten wird. An dem Federteller 105 stützt sich eine auf den Schieber gegen die Druckkraft im Druckraum 87 wirkende Rückstellfeder 107 ab.

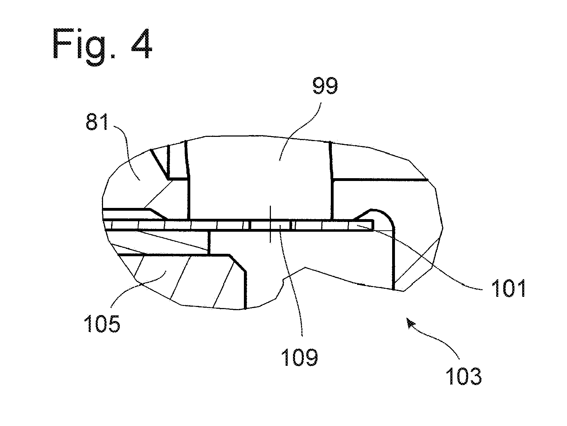

Wie die Fig. 4 deutlicher zeigt, weist der Ventilkörper 101 eine Öffnung auf, die bei geschlossenem Sitzventil 103 einen Notbetriebsdurchlassquerschnitt 109 bestimmt, der kleiner ist als der maximal geöffnete Querschnitt der Drosselöffnung 75 (Fig. 3).

Bei einer Kolbenstangenbewegung wird Dämpfmedium über die Hochdruckteilstrecke 23a durch den Übergangsstutzen 45 zur Unterseite des Hauptdämpfventilkörpers 51 verdrängt und übt damit eine Öffnungskraft auf den Hauptdämpfventilkörper 51 aus. Über den Steuerkanal 59 steht auch im Steuerraum 61 Dämpfmedium an, dessen Druckkraft in Schließrichtung auf den Hauptstufenventilkörper 51 wirkt. Zusätzlich spannt die Schließfeder 53 den Hauptdämpfventilkörper 51 vor.

Das Druckniveau im Steuerraum 61 liegt auch im Anschlusskanal 71 des Rohrkörpers 73 zwischen dem Steuerraum 61 und dem Vorsteuerventilraum 69 vor. In Abhängigkeit des Druckniveaus im Druckraum 87 des Ventilgehäuses 33 wirkt auf den Stellkolben 83 eine Stellkraft gegen die Kraft der Rückstellfeder 107. Übersteigt die Druckkraft des im Druckraum 87 befindlichen Druckmediums die Kraft der Rückstellfeder 107, sowie eine Druckkraftkomponente, die von dem Druck im Vorsteuerventilraum 69 auf die Stirnfläche 85 des Schiebers 77 wirkt und noch zusätzliche Reibkräfte, dann führt der mit dem Stellkolben 83 verbundene Schieber 77 eine Axialbewegung aus, wodurch die wirksame Größe der Drosselöffnung 75 im Rohrkörper 73 reduziert wird. Gleichzeitig hebt der mit dem Stellkolben 83 verbundene Ventilkörper 101 des Sitzventils 103 von der Anschlussöffnung 99 ab und gibt einen vergleichsweise großen Querschnitt am Sitzventil 103 frei. Das Druckniveau im Vorsteuerventilraum 69 und damit auch im Steuerraum 61 des Hauptdämpfventils 37 sinkt deutlich ab, so dass auch die auf den Hauptdämpfventilkörper 51 wirksame Schließkraft reduziert wird. Der Hauptdämpfventilkörper kann vom Druck in der Zuflussöffnung 43 vom Sitzventilkörper 41 abheben, so dass das Dämpfmedium z. B. in die Ausgleichskammer 19 abströmen kann. Das in dem Steuerraum 61 und dem Vorsteuerventilraum 69 befindliche Dämpfmedium strömt über die Anschlussöffnungen 99 ebenfalls in die Ausgleichskammer 19 ab.

Je höher der Druck im Druckraum 87 steigt, umso weiter bewegt sich der Schieber 77 in Richtung der Trennwand 65 und verschließt dabei zunehmend die Drosselöffnung 75. Dabei steigt auch das Druckniveau im Steuerraum 61, so dass die auf den Hauptdämpfventilkörper 51 wirkende Druckkraft in Schließrichtung zunimmt. Folglich steigt auch die Dämpfkraft am verstellbaren Dämpfventil 27.

Bei einer Schieberbewegung wird der wirksame Querschnitt des von dem Ventilkörper 101 in Verbindung mit den Anschlussöffnungen 99 gebildeten Sitzventils 103 nicht beeinflusst, da das für die Schließkraft auf den Hauptdämpfventilkörper 51 bestimmende Druckniveau von der Größe der Drosselöffnung 75 bestimmt wird und die ist in jedem Fall kleiner als der Querschnitt am geöffneten Sitzventil 103. Fällt die Druckversorgung des Druckraums 87 aus, dann bewegt die Rückstellfeder 107 den Schieber 77 in die in Fig. 3 dargestellte Endposition, bei der zwar ein sehr großer Querschnitt an der Drosselöffnung 75 vorliegt, das Druckniveau im Vorsteuerventilraum 69, im Anschlusskanal 71 und im Steuerraum 61 jedoch von dem Notbetriebsdurchlassquerschnitt 109 im Ventilkörper 101 bestimmt wird, der für eine mittleres Druckniveau in den vorgenannten Räumen und damit für eine mittlere Dämpfkrafteinstellung des verstellbaren Dämpfventils 27 sorgt.

## Patentansprüche

1. Schwingungsdämpfer (1) mit einem verstellbaren Dämpfventil (27), das von einem Dämpfmedium angeströmt wird, umfassend ein Ventilgehäuse (33) mit einem Druckraum (87), in dem ein auf ein Ventilelement (51) einwirkender Stellkolben (83) über eine Druckmediumversorgung (29) mit einem Druckmedium beaufschlagt wird, wobei der Stellkolben (83) gegen eine Rückstellfeder (107) angesteuert wird,
**dadurch gekennzeichnet,**
**dass** das verstellbare Dämpfventil (27) für das Ventilelement (51) ein Vorsteuerventil (39) aufweist, das einen Dämpfmediumstrom innerhalb des verstellbaren Dämpfventils (27) zwischen einem Steuerraum (61) und einem Arbeitsraum (21a; 21b) des Schwingungsdämpfers beeinflusst, wobei in Abhängigkeit des Druckniveaus innerhalb des Steuerraums (61) eine Schließkraft auf ein die Dämpfkraft bestimmendes Hauptdämpfventil (37) ausgeübt wird.

2. Schwingungsdämpfer nach Anspruch 1,
**dadurch gekennzeichnet,**
**dass** das Hauptdämpfventil (37) einen Steuerkanal (59) zwischen einem Arbeitsraum (21 a; 21 b; 19) und dem Steuerraum (61) des verstellbaren Dämpfventils (27) aufweist.

3. Schwingungsdämpfer nach Anspruch 2,
**dadurch gekennzeichnet,**
**dass** der Steuerkanal (59) von mindestens einer Öffnung in einem Hauptdämpfventilkörper (51) gebildet wird.

4. Schwingungsdämpfer nach Anspruch 3,
**dadurch gekennzeichnet,**
**dass** der Hauptdämpfventilkörper (51) mit einer ersten Deckseite an einen Arbeitsraum (19; 21 a; 21 b) und seiner zweiten Deckseite an den Steuerraum (61) angeschlossen ist.

5. Schwingungsdämpfer nach Anspruch 1,
**dadurch gekennzeichnet,**
**dass** das Vorsteuerventil (39) als Schieberventil ausgeführt ist.

6. Schwingungsdämpfer nach Anspruch 1,
**dadurch gekennzeichnet,**
**dass** zwischen dem Steuerraum (61) des Hauptdämpfventils (37) und einem Vorsteuerventilraum (69) des Vorsteuerventils (39) eine Trennwand besteht, die einen Anschlusskanal (71) mit einer Drosselöffnung (75) aufweist, die von dem Stellkolben (83) in ihrer wirksamen Größe eingestellt wird.

7. Schwingungsdämpfer nach Anspruch 6,
**dadurch gekennzeichnet,**
**dass** der Anschlusskanal (71) von einem Rohrkörper (73) gebildet wird, der mit einem am Stellkolben (83) befestigten Schieber (77) zusammenwirkt.

8. Schwingungsdämpfer nach Anspruch 6,
**dadurch gekennzeichnet,**
**dass** der Anschlusskanal (71) endseitig in Richtung des Stellkolbens (83) verschlossen ist.

9. Schwingungsdämpfer nach Anspruch 7,
**dadurch gekennzeichnet,**
**dass** der Schieber (77) als Außenrohrkörper ausgeführt ist , der auf dem Rohrkörper (73) des Anschlusskanals (71) axial verschieblich gleitbar gelagert ist.

10. Schwingungsdämpfer nach Anspruch 6,
**dadurch gekennzeichnet,**
**dass** der Vorsteuerventilraum (69) von der Trennwand (65) und einem Vorsteuerventilgehäuse (67) innerhalb des Ventilgehäuses (33) gebildet wird, wobei der Schieber (77) durch eine Anschlussöffnung (79) im Vorsteuerventilgehäuse (67) bewegbar ist.

11. Schwingungsdämpfer nach Anspruch 10,
**dadurch gekennzeichnet,**
**dass** der Stellkolben (83) in einem Deckel (81) des Vorsteuerventilgehäuses (87) dichtend geführt ist.

12. Schwingungsdämpfer nach Anspruch 10,
**dadurch gekennzeichnet,**
**dass** das Ventilgehäuse (33) und das darin befindliche Vorsteuerventilgehäuse (67) einen Entlüftungsraum (91) für den Stellkolben (83) begrenzen.

13. Schwingungsdämpfer nach Anspruch 12,
**dadurch gekennzeichnet,**
**dass** ein den Rohrkörper (73) des Anschlusskanals (71) aufnehmender Innenraum (95) des Schiebers (77) mit einer Lüftungsöffnung (97) zum Entlüftungsraum (91) verbunden ist.

14. Schwingungsdämpfer nach Anspruch 7,
**dadurch gekennzeichnet,**
**dass** an dem Schieber (77) ein Federteller (105) für die mindestens eine Rückstellfeder (107) befestigt ist.

15. Schwingungsdämpfer nach Anspruch 1,
**dadurch gekennzeichnet,**
**dass** der Vorsteuerventilraum (69) mindestens eine vom der Drosselöffnung (75) getrennte Anschlussöffnung (99) an einen Arbeitsraum (19; 21a; 21 b) aufweist, die von dem Schieber (77) angesteuert wird.

16. Schwingungsdämpfer nach Anspruch 6,
**dadurch gekennzeichnet,**
**dass** der Schieber (77) mindestens einen Ventilkörper (101) trägt, der mit der Anschlussöffnung (99) ein Sitzventil (103) bildet.

17. Schwingungsdämpfer nach Anspruch 16,
**dadurch gekennzeichnet,**
**dass** die Anschlussöffnung (99) bei geschlossenem Sitzventil (103) einen Notbetriebsdurchlassquerschnitt (109) aufweist.

18. Schwingungsdämpfer nach Anspruch 17,
**dadurch gekennzeichnet,**
**dass** der Notbetriebsdurchlassquerschnitt (109) von einer Öffnung im Ventilkörper (101) gebildet wird.
